# EUROPEAN PATENT APPLICATION

(11) **EP 0 673 810 A2**
(43) Date of publication of application: **27.09.1995**
(21) Application number: 95101510.6
(22) Date of filing: 03.02.1995
(51) Int. Cl.: B60R 22/28

(54) **Seat belt webbing energy management device**

(30) Priority: 21.03.1994 US 215307
(71) Applicant: TRW VEHICLE SAFETY SYSTEMS INC., Lyndhurst Ohio 44124 (US)
(72) Inventor: Lane, Wendell C., Jr., Romeo, Michigan 48065 (US); Varga, Robert M., Rochester Hills, Michigan 48306 (US)
(74) Representative: Wagner, Karl H., Dipl.-Ing.

(57) **Abstract**

A vehicle safety apparatus (11) includes a length of belt webbing (34) for restraining a vehicle occupant. The belt webbing includes a plurality of folded portions (130, 132, 134) overlying each other and unstitched to each other. The safety apparatus (11) includes means (10) for controlling unfolding of the unstitched folded portions of belt webbing. The length of belt webbing (34) has end portions (136, 138) extending from opposite ends of the means for controlling unfolding. The means (10) for controlling unfolding includes means (32) for applying force to the unstitched folded portions of belt webbing for resisting unfolding. The unstitched folded portions (130, 132, 134) are movable relative to each other against the force applied to the unstitched folded portions in response to the application of a tensile force greater than a predetermined force to the belt webbing end portions (136, 138). The length of belt webbing (34) unfolds over a controlled period of time, reducing the abruptness of the load on the vehicle occupant during a vehicle collision.

## Description

### Background of the Invention

### Technical Field

The present invention relates to a vehicle occupant restraint system. In particular, the present invention relates to an energy management device for seat belt webbing used in a seat belt system.

### Description of the Prior Art

Seat belt systems are commonly used to restrain vehicle occupants. A typical seat belt system for a vehicle occupant includes a length of belt webbing extensible about the occupant and having opposite ends anchored to the vehicle. In the event of sudden deceleration such as occurs in a vehicle collision, the occupant tends to move forward relative to the vehicle and is restrained by the belt webbing.

The vehicle occupant can experience a sudden load if the occupant's forward movement is restrained by an inextensible length of belt webbing. To alleviate this sudden load, it is known to stitch together portions of the belt webbing to shorten the belt webbing. When the occupant engages the belt webbing with sufficient force, the load on the belt webbing tears the stitching. The belt webbing portions separate and the belt webbing extends slightly. Thus, the occupant's movement is restrained at a reduced rate over an increased period of time. This can reduce the abruptness of the load experienced by the vehicle occupant.

### Summary of the Invention

The present invention is a vehicle safety apparatus comprising a length of belt webbing for restraining a vehicle occupant. The length of belt webbing includes a plurality of folded portions of belt webbing disposed in an overlying relationship with each other and unstitched to each other. The safety apparatus includes means for controlling unfolding of the unstitched folded portions of belt webbing. The length of belt webbing has end portions extending away from the means for controlling unfolding in opposite directions.

The means for controlling unfolding includes means for applying force to the unstitched folded portions of belt webbing for resisting unfolding. The unstitched folded portions are movable relative to each other, against the force applied to the unstitched folded portions, in response to the application of a tensile force greater than a predetermined force to the belt webbing end portions.

In one embodiment of the invention, the means for applying force includes a pair of clamp plates disposed on opposite sides of the unstitched folded portions of belt webbing. The clamp plates clamp the folded portions together to resist unfolding of the folded portions.

In another embodiment of the invention, the means for applying force includes a sleeve circumscribing the unstitched folded portions of belt webbing. The sleeve tears in response to the application of a tensile force greater than a predetermined force to the belt webbing end portions, to enable unfolding of the folded portions.

### Brief Description of the Drawings

Further features of the present invention will become apparent to those skilled in the art to which the present invention relates from reading the following specification with reference to the accompanying drawings, in which:
Fig. 1 is a schematic illustration of a vehicle seat belt system including a seat belt webbing energy management device in accordance with the present invention;
Fig. 2 is a top plan view of the energy management device of Fig. 1 and showing the belt webbing in a shortened condition;
Fig. 3A is a view taken along line 3A-3A of Fig. 2;
Fig. 3B is a view taken along line 3B-3B of Fig. 2 and showing the belt webbing in a partially extended condition;
Fig. 3C is a view similar to Fig. 3B and showing the belt webbing in a fully extended condition;
Fig. 4 is a perspective view of an energy management device in accordance with a second embodiment of the invention;
Fig. 5 is a longitudinal sectional view of the energy management device of Fig. 4;
Fig. 6 is a perspective view of an energy management device in accordance with a third embodiment of the invention;
Fig. 7A is a longitudinal sectional view of the energy management device of Fig. 6 and showing the belt webbing in a shortened condition;
Fig. 7B is a view similar to Fig. 7A and showing the belt webbing in a partially extended condition;
Fig. 7C is a view similar to Fig. 7B and showing the belt webbing in a fully extended condition;
Fig. 8 illustrates an energy management device in accordance with a fourth embodiment of the invention; and
Fig. 9 illustrates an energy management device in accordance with a fifth embodiment of the invention.

### Description of Preferred Embodiments of the Invention

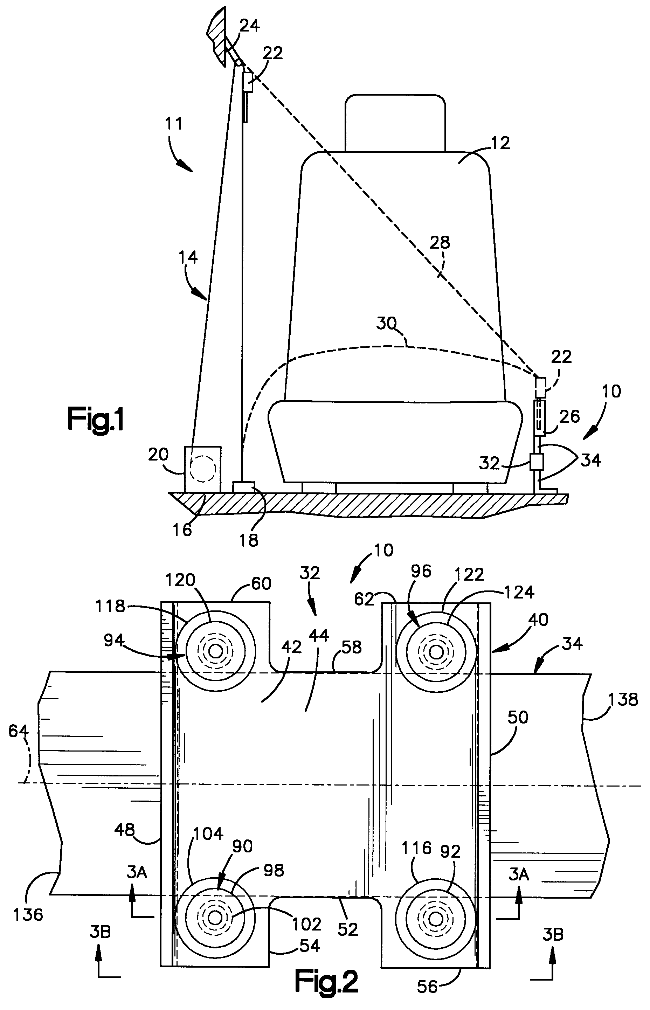

The present invention relates to a vehicle occupant restraint, and in particular, to an energy management device for seat belt webbing in a vehicle occupant restraint system. The present invention is applicable to various seat belt webbing energy management device constructions. As representative of the present invention, Fig. 1 illustrates an energy management device 10. The energy management device 10 is incorporated in a three-point continuous loop seat belt system 11 for use in restraining an occupant of a vehicle.

During operation of the vehicle, an occupant of the vehicle sits on a seat 12 which is illustrated as a front passenger seat in the vehicle A length of belt webbing 14 is extensible about the vehicle occupant. One end of the length of belt webbing 14 is anchored to the vehicle body 16 at an anchor point 18. The opposite end of the belt webbing 14 is attached to a retractor 20 secured to the vehicle body. Intermediate its ends, the belt webbing 14 passes through a tongue assembly 22 and a D-ring 24. When the seat belt system 11 is not in use, the belt webbing 14 is wound on the retractor 20 and is oriented generally vertically on one side of the seat 12, as shown in solid lines in Fig. 1

To engage the seat belt system 11, the tongue assembly 22 is manually grasped and is pulled across the lap and torso of the occupant sitting in the seat 12. As the tongue assembly 22 is pulled across the lap and torso of the occupant, the tongue assembly moves along the belt webbing 14, and the belt webbing 14 is unwound from the retractor 20. When the belt webbing 14 has been pulled across the lap and torso of the occupant, the tongue assembly 22 is connected with a buckle 26, as shown in dashed lines in Fig. 1. The buckle 26 is connected to the vehicle body 16 and is disposed on the side of the seat 12 opposite the anchor point 18. When the seat belt system 11 is thus buckled, the length of belt webbing 14 is divided by the tongue assembly 22 into a torso portion 28 which extends across the torso of the occupant and a lap portion 30 which extends across the lap of the occupant.

A buckle such as the buckle 26 in a seat belt system such as the seat belt system 11 is typically connected to the vehicle body by an inextensible cable or length of belt webbing. In accordance with the present invention, the energy management device 10 (Fig. 1) is incorporated in the seat belt system 11 between the buckle 26 and the vehicle body 16. The energy management device 10 is disposed in a force transmitting relationship between the buckle 26 and the vehicle body 16.

The energy management device 10 (Fig. 1) includes a clamp assembly indicated schematically at 32 and a length of belt webbing indicated schematically at 34. The length of belt webbing 34 has portions which extend from opposite ends of the clamp assembly 32 to interconnect the buckle 26 and the vehicle body 16. The length of belt webbing 34 is preferably one single continuous length of belt webbing extending through the clamp assembly 32.

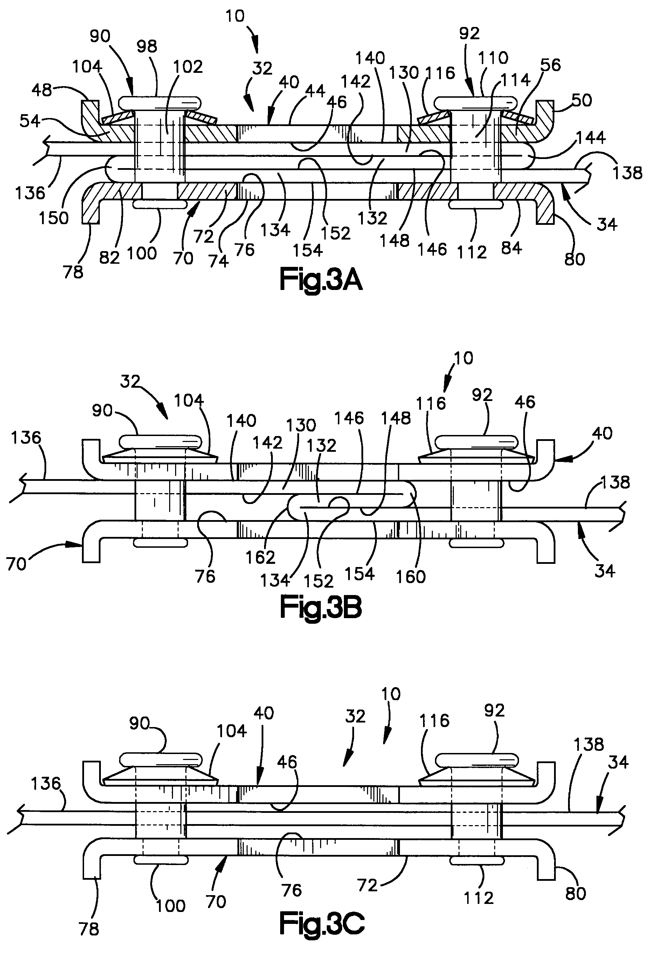

The clamp assembly 32 (Figs. 2 and 3A) includes a pressure plate 40 which is preferably made of metal. The pressure plate 40 has a generally planar main body portion 42. The main body portion 42 has an outer major side surface 44 and an inner major side surface 46. A pair of flanges 48 and 50 extend transverse to the main body portion 42 at opposite ends of the pressure plate 40.

A recess 52 on one side of the pressure plate 40 separates two projecting side portions 54 and 56 of the pressure plate. A similar recess 58 on the opposite side of the pressure plate 40 separates two projecting side portions 60 and 62 of the pressure plate. The pressure plate 40 is symmetrical about a longitudinal axis 64 of the energy management device 10.

The clamp assembly 32 also includes a base plate 70 (Fig. 3A) which is identical in construction to the pressure plate 40. The base plate 70 has a generally planar main body portion 72 with an outer major side surface 74 and an inner major side surface 76. The base plate 70 has flanges 78 and 80 at opposite ends. The base plate 70 has two projecting side portions 82 and 84 shown in Fig. 3A, and similar projecting side portions, on the opposite side of the axis 64, which are not shown in the drawings.

Four fixed-length spacer rivets 90, 92, 94 and 96 extend between and interconnect the pressure plate 40 and the base plate 70. The first rivet 90 (Figs. 2 and 3) has a first head portion 98 spaced from the outer major side surface 44 of the pressure plate 40. A second head portion 100 of the rivet 90 engages the outer major side surface 74 of the base plate 70. A shank portion 102 of the rivet 90 extends between and interconnects the head portions 98 and 100 of the rivet.

A Belleville®-type spring 104 is disposed between the outer major side surface 44 of the pressure plate 40 and the head portion 98 of the rivet 90. The spring 104 encircles the shank portion 102 of the rivet 90. The spring 104 exerts force in a direction along the shank portion 102 of the rivet 90 which tends to spread apart the pressure plate 40 and the head portion 98 of the rivet 90.

The second spacer rivet 92 is identical to the first rivet 90. The spacer rivet 92 extends between the side portion 56 of the pressure plate 40 and the side portion 84 of the base plate 70. The rivet 92 has a head portion 110 spaced from the outer major side surface 44 of the pressure plate 40. A head portion 112 of the rivet 92 engages the outer major side surface 74 of the base plate 70. A shank portion 114 of the rivet 92 extends between and interconnects the rivet head portions 110 and 112.

A Belleville®-type spring 116, which is identical to the spring 104, is disposed between the outer major side surface 44 of the pressure plate 40 and the head portion 110 of the rivet 92. The spring 116 encircles the shank portion 114 of the rivet 92. The spring 116 exerts force in a direction along the shank portion 114 of the rivet 92 which tends to spread apart the pressure plate 40 and the head portion 110 of the rivet 92.

The third rivet 94 is identical to the rivets 92 and 90 and interconnects the side portion 60 of the pressure plate 40 with the base plate 70. A Belleville®-type spring 118 is disposed between a head portion 120 of the rivet 94 and the outer major side surface 44 of the pressure plate 40. The spring 118 is identical to the springs 104 and 116.

The fourth rivet 96 extends between the side portion 62 of the pressure plate 40 and the base plate 70. A fourth Belleville®-type spring 122 is disposed between a head portion 124 of the rivet 96 and the outer major side surface 44 of the pressure plate 40. The spring 122 is identical to the springs 104, 116 and 118.

The fixed-length rivets 90, 92, 94 and 96 together cooperate with their associated springs 104, 116, 118 and 122 to bias the pressure plate 40 toward the base plate 70. The four rivets 90, 92, 94 and 96 define between them a belt webbing path along which the length of belt webbing 34 extends longitudinally through the clamp assembly 32.

The length of belt webbing 34 (Fig. 3A) includes three folded portions 130, 132 and 134 disposed in an overlying relationship between the pressure plate 40 and the base plate 70 of the clamp assembly 32. The folded portions 130, 132 and 134 are in abutting engagement but are unstitched to each other and are thus movable relative to each other. An end portion 136 of the belt webbing 34 extends from the clamp assembly 32 between the flange 48 of the pressure plate 40 and the flange 78 of the base plate 70. An opposite end portion 138 of the length of belt webbing 34 extends from the opposite end of the clamp assembly 32 between the flange 50 of the pressure plate 40 and the flange 80 of the base plate 70.

The first folded portion 130 of the length of belt webbing 34 extends along the pressure plate 40. An outer major side surface 140 of the first folded portion 130 is in abutting engagement with the inner major side surface 46 of the pressure plate 40. The first folded portion 130 of the belt webbing 34 also has an inner major side surface 142.

The length of belt webbing 34 is folded 180° at a fold line 144. The fold line 144 separates the first and second folded portions 130 and 132 of the belt webbing 34. The fold line 144 extends transverse to the axis 64.

The second folded portion 132 of the belt webbing 34 extends generally parallel to the first folded portion 130 of the belt webbing. A first major, side surface 146 of the second folded portion 132 is in abutting engagement with the inner major side surface 142 of the first folded portion 130. The second folded portion 132 is not stitched to the first folded portion 130. The second folded portion 132 of the belt webbing 34 also has a second major side surface 148.

The length of belt webbing 34 is folded 180° at a fold line 150. The fold line 150 separates the second and third folded portions 132 and 134 of the belt webbing 34. The fold line 150 extends transverse to the axis 64.

The third folded portion 134 of the belt webbing 34 extends generally parallel to and between the second folded portion 132 of the belt webbing and the base plate 70. An inner major side surface 152 of the third folded portion 134 is in abutting engagement with the second major side surface 148 of the second folded portion 132. The third folded portion 134 is not stitched to the second folded portion 132. An outer major side surface 154 of the third folded portion 134 of the belt webbing 34 is in abutting engagement with the inner major side surface 76 of the base plate 70. The third folded portion 134 of the belt webbing 34 merges into the second end portion 138 of the belt webbing, which projects outwardly of the clamp assembly 32.

The spring force exerted by the springs 104, 116, 118 and 122 biases the pressure plate 40 toward the base plate 70. This places a clamp load on the folded portions 130, 132 and 134 of the belt webbing 34 which are disposed between the pressure plate 40 and the base plate 70. The spring rate of the springs 104, 116, 118 and 122 is selected so that the resulting clamp load is sufficient to hold the belt webbing folded portions 130, 132 and 134 within the clamp assembly 32, between the pressure plate 40 and the base plate 70, unless a tensile force greater than a predetermined force is applied to the projecting end portions 136 and 138 of the belt webbing 34. The predetermined force is selected to be a force which is not experienced during use of the vehicle safety belt system 11 other than in a vehicle collision. Thus, the parts of the energy management device 10, including the clamp assembly 32 and the folded portions of the length of belt webbing 34, are normally in the position shown in Fig. 3A in which the belt webbing 34 is in a folded or shortened condition.

In the event of sudden deceleration such as occurs in a vehicle collision, the vehicle occupant moves forward in the vehicle relative to the vehicle body 16 and engages the belt webbing 14. The kinetic energy of the forward moving vehicle occupant is transmitted through the belt webbing 14 and the buckle 26 into the length of belt webbing 34.

A tensile force greater than the predetermined force is thus applied to the end portions 136 and 138 of the belt webbing 34. The clamp force exerted by the clamp assembly 32 on the folded portions 130, 132 and 134 of the belt webbing 34 is not sufficient to maintain the belt webbing in the folded condition shown in Fig. 3A. The folded portions 130, 132 and 134 move relative to each other against the clamp force exerted by the pressure plate 40 and the base plate 70. The belt webbing 34 unfolds and moves over a period of time from the shortened and folded condition shown in Fig. 3A, through a partially extended and partially unfolded condition shown in Fig. 3B, to a fully extended condition as shown in Fig. 3C in which the belt webbing is straight and unfolded.

During this unfolding process, the first folded portion 130 of the belt webbing 34 slides along the pressure plate 40. As this sliding movement occurs, friction between the outer major side surface 140 of the belt webbing folded portion 130 and the inner major side surface 46 of the pressure plate 40 resists but does not block relative movement between the folded portion 130 and the pressure plate.

Simultaneously, the belt webbing first folded portion 130 slides along the belt webbing second folded portion 132. Friction between the inner major side surface 142 of the first folded portion 130 and the first major side surface 146 of the second folded portion 132 resists but does not block relative movement of the first and second folded portions.

Also, the belt webbing second folded portion 132 slides along the belt webbing third folded portion 134. Friction between the second major side surface 148 of the second folded portion 132 and the inner major side surface 152 of the third folded portion 134 resists but does not block movement of the second and third belt webbing folded portions relative to each other.

The third folded portion 134 of the belt webbing 34 also slides along the base plate 70 of the clamp assembly 32. Friction between the outer major side surface 154 of the belt webbing third folded portion 134 and the inner major side surface 76 of the base plate 70 resists but does not block relative movement of the folded portion 134 and the base plate 70.

The belt webbing 34 is continuously refolded as the belt webbing moves from the condition shown in Fig. 3A to the condition shown in Fig. 3C. For example, the fold 144 (Fig. 3A) separating the first and second folded portions 130 and 132 effectively moves to and through a new position along the length of belt webbing 34 as indicated at 160 in Fig. 3B. Similarly, the fold 150 (Fig. 3A) between the second and third belt webbing folded portions 132 and 134 effectively moves to and through a new position along the length of belt webbing 34 as indicated at 162 in Fig. 3B. Some of the energy applied to the length of belt webbing 34 is absorbed in the continuous refolding of the belt webbing.

As tensile force continues to be applied to the end portions 136 and 138 of the belt webbing 34, the parts of the energy management device 10 move to the condition shown in Fig. 3C. The length of belt webbing 34 unfolds and extends completely, against the biasing force or clamp load of the clamp assembly 32 and against the frictional resistance applied by the clamp assembly. Once the length of belt webbing 34 is completely unfolded as illustrated in Fig. 3C, tensile force is transmitted substantially undiminished between the end portions 136 and 138 of the belt webbing.

The unfolding and extending of the belt webbing 34 is not instantaneous but instead occurs over a period of time, because the friction between the relatively sliding parts of the energy absorber 10 retards the unfolding and lengthening of the belt webbing 34. During this time period, the seat belt system 11 does not fully block forward movement of the vehicle occupant. The occupant's forward movement does not cease until the length of belt webbing 34 is completely unfolded and extended.

Therefore, it can be seen that, in an event such as a vehicle collision, occupant deceleration resulting from engagement with the seat belt system 11 occurs over a longer period of time, as compared to occupant deceleration resulting from engagement with an inextensible length of belt webbing. This reduces the abruptness of the load on the vehicle occupant during a vehicle collision. All the kinetic energy of the moving vehicle occupant is transferred to the seat belt system 11, but over a longer time period. Transferring the same amount of kinetic energy to the belt webbing 34 over a longer period of time results in the lower rate of deceleration. The energy management device 10 thus helps to manage and control the kinetic energy of the moving vehicle occupant resulting from the sudden vehicle deceleration.

The spring rate of the springs 104, 116, 118 and 122 controls the clamp load on the folded portions 130, 132 and 134 of the belt webbing 34 and thus controls the amount of friction between the relatively moving parts of the energy management device 10. The amount of friction between the moving parts controls the period of time which is needed to move the belt webbing 34 from the folded condition to the unfolded condition. Thus, by varying the spring rate of the springs 104, 116, 118 and 122, the characteristics of the energy management device 10 can be controlled as desired.

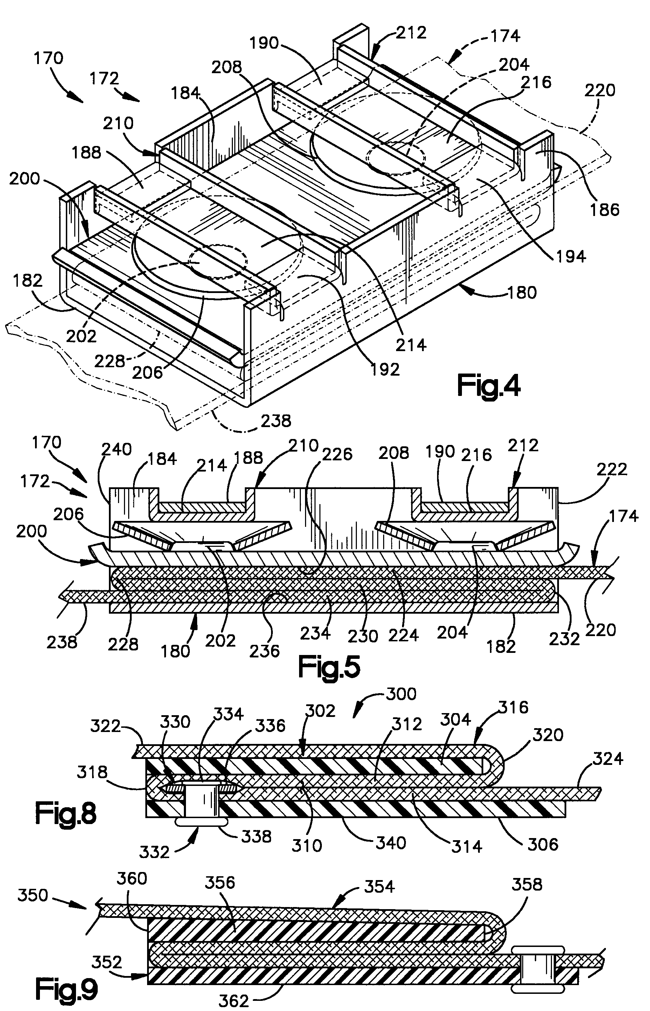

Figs. 4 and 5 illustrate an energy management device 170 in accordance with a second embodiment of the invention. The energy management device 170 operates in a manner similar to the energy management device 10 illustrated in Figs. 1-3. However, the energy management device 170 includes a clamp assembly 172 which is constructed to be not substantially wider than the width of the length of belt webbing 174 associated with the clamp assembly 172. The energy management device 170, including its associated length of belt webbing 174, may be substituted for the energy management device 10 in the seat belt system 11 shown in Fig. 1.

The clamp assembly 172 (Figs. 4 and 5) includes a generally U-shaped base 180 having a planar bottom wall 182 and opposed parallel upstanding side walls 184 and 186. The side walls 184 and 186 are spaced apart by a distance approximately equal to, or slightly greater than, the width of the belt webbing 174. The side wall 184 has a pair of tabs 188 and 190 bent inwardly toward the side wall 186. Similarly, the side wall 186 has a pair of tabs 192 and 194 (Fig. 4) bent inwardly toward the side wall 184.

A generally planar pressure plate 200 is received between the side walls 184 and 186 of the base 180, and between the bottom wall 182 and the inwardly-projecting tabs 188, 190, 192 and 194. The pressure plate 200 is substantially the same width as the belt webbing 174. The pressure plate 200 has a rectangular configuration approximately the same size as the rectangular configuration of the base bottom wall 182. A pair of dimples 202 and 204 on the pressure plate 200 project upward in a direction away from the bottom wall 182 of the base 180.

A pair of Belleville®-type springs 206 and 208 are disposed on the pressure plate 200. A central opening of the first spring 206 receives the first dimple 202 of the pressure plate 200. A central opening of the second spring 208 receives the second dimple 204 of the pressure plate 200.

A pair of U-shaped clamp members 210 and 212 extend between the side walls 184 and 186 of the base 180, on a side of the pressure plate 200 opposite from the base bottom wall 182. The first clamp member 210 has a flat base portion 214 which is held down against the first spring 206 by the tabs 188 and 192 of the clamp assembly base 180. The second clamp member 212 has a flat base portion 216 which is held down against the second spring 208 by the tabs 190 and 194 of the clamp assembly base 180.

The length of belt webbing 174 is folded in and extends through the clamp assembly 172 in a manner similar to the manner in which the belt webbing 34 is folded in and extends through the clamp assembly 32 of Figs. 1-3. An end portion 220 of the belt webbing 174 projects from one end 222 of the clamp assembly 172. The belt webbing end portion 220 merges with a first folded portion 224 of the belt webbing 174 which is disposed in abutting engagement with a lower major side surface 226 of the pressure plate 200.

The belt webbing 174 is folded at 228 to form a second folded portion 230 of the belt webbing extending alone the first folded portion 224 between the first folded portion and the base bottom wall 182. The belt webbing 174 is again folded at 232 to form a third folded portion 234. The third folded portion 234 of the belt webbing 174 extends in abutting engagement with a inner major side surface 236 of the base bottom wall 182, between the second folded portion 230 and the base bottom wall. A second end portion 238 of the belt webbing 174 extends out of the opposite end 240 of the clamp assembly 172.

The folded portions 224, 230 and 234 of the belt webbing 174 extend through a path inside of and between the base side walls 184 and 186. The folded portions 224, 230 and 234 are not stitched to each other. The belt webbing folded portions 224, 230 and 234 extend underneath the springs 206 and 208, that is, between the springs and the base bottom wall 182. The clamp assembly 172 is wider than the width of the belt webbing 174 by only about the combined thickness of the plate side walls 184 and 186.

Operation of the energy management device 170 is similar to operation of the energy management device 10 illustrated in Figs. 1-3. The spring force exerted by the springs 206 and 208 biases the pressure plate 200 toward the bottom wall 182 of the base 180. The folded portions 224, 230 and 234 of the belt webbing 174 are clamped between the pressure plate 200 and the base 180. The parts of the energy management device 170 are normally in the position shown in Figs. 4 and 5 in which the belt webbing 174 is in a shortened and folded condition.

In the event of sudden deceleration such as occurs in a vehicle collision, tensile force greater than a predetermined force is applied to the projecting end portions 220 and 238 of the belt webbing 174. The clamp force on the folded portions 224, 230 and 234 of the belt webbing 174 is not sufficient to hold the belt webbing 174 in the condition shown in Figs. 4 and 5. The folded portions 224, 230 and 234 move relative to each other against the clamp force exerted by the pressure plate 200 and the base 180. The belt webbing 174 unfolds and moves from the shortened condition to an extended condition (not shown).

As the belt webbing 174 unfolds and moves to the extended condition, relative sliding movement occurs between various surfaces in the energy management device 170. Frictional resistance occurs as the first folded portion 224 of the belt webbing 174 slides along the inner major side surface 226 of the pressure plate 200, and as the first folded portion 224 of the belt webbing 174 slides along the second folded portion 230. Frictional resistance also occurs, and is overcome, as the second folded portion 230 slides along and relative to the third folded portion 234 of the belt webbing 174, and as the third folded portion 234 of the belt webbing slides along the inner major side surface 236 of the base bottom wall 182. Further, as the belt webbing 174 unfolds and moves from the shortened condition to the extended condition, energy is absorbed in the continuous refolding of the belt webbing as it is straightened under the effect of the applied tensile force.

The friction between the relatively sliding parts of the energy management device 170 retards the unfolding and lengthening of the belt webbing 174. This reduces the abruptness of the load on the vehicle occupant during a vehicle collision.

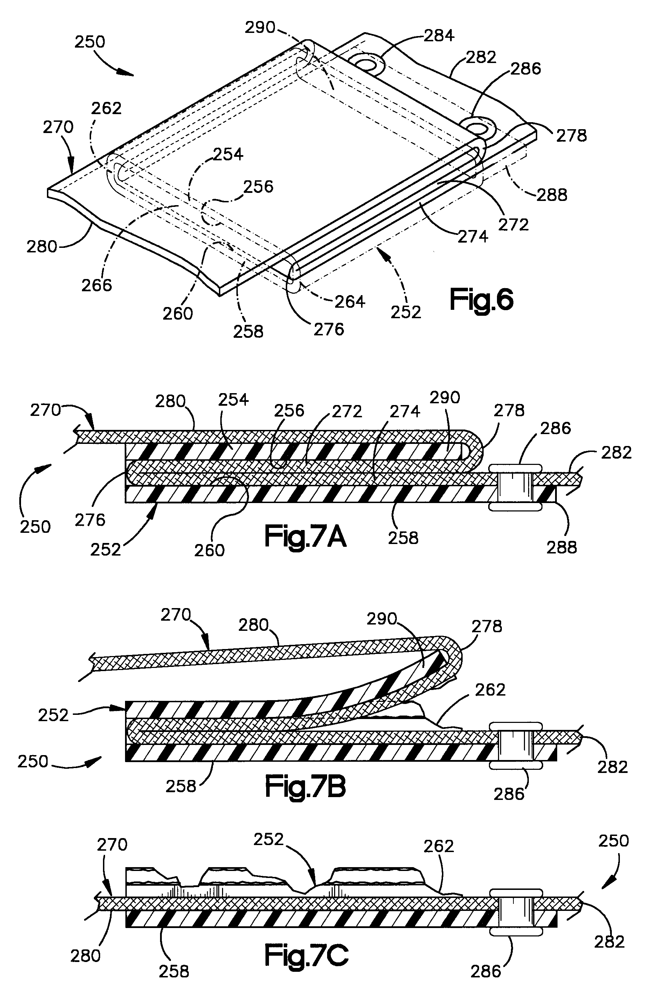

Figs. 6 and 7A-7C illustrate an energy management device 250 in accordance with a third embodiment of the invention. The energy management device 250 may be substituted in the seat belt system 11 for the energy management device 10 illustrated in Figs. 1-3.

The energy management device 250 includes a sleeve 252, preferably made of plastic, having an open, generally rectangular, cross-sectional configuration. The sleeve 252 includes an upper wall 254 with an inner major side surface 256 presented toward a lower wall 258 of the sleeve. The sleeve lower wall 258 is spaced from and extends parallel to the upper wall 254. The lower wall 258 has an inner major side surface 260 presented toward the upper wall 254.

The sleeve 252 includes a pair of side walls 262 and 264 (Fig. 6) which extend between and interconnect the upper and lower walls 254 and 258. The side wall 262 is spaced from and extends generally parallel to the side wall 264. The sleeve walls 254, 258, 262 and 264 define between them a chamber 266.

The energy management device 250 includes a single continuous length of belt webbing 270. A first folded portion 272 of the belt webbing 270 extends along the inner major side surface 256 of the sleeve upper wall 254. A second folded portion 274 of the belt webbing 270 extends along the inner major side surface 260 of the sleeve lower wall 258. The belt webbing 270 is folded 180° at 276 between the first and second folded portions 272 and 274. The folded portions 272 and 274 are not stitched to each other.

The belt webbing 270 is also folded 180° at 278 between the first folded portion 272 and a first end portion 280 of the belt webbing. The fold 278 is adjacent one end of the sleeve 252 so that the upper wall 254 of the sleeve overlies the first folded portion 272 of the belt webbing 270 and the webbing first end portion 280 overlies the upper wall 254 of the sleeve 252. The webbing first end portion 280 thus extends from the one end of the sleeve 252 to the opposite end and then projects outwardly from the sleeve. A second end portion 282 of the belt webbing 270 projects from the one end of the sleeve 252. The second end portion 282 is fastened by a pair of rivets 284 and 286 to a projecting portion 288 of the sleeve lower wall 258.

The sleeve 252 applies force to the unstitched folded portions 272 and 280 of the belt webbing 270 to resist unfolding of the belt webbing. The rivets 284 and 286 hold the belt webbing folded portions 272 and 280 in their folded condition in the sleeve 252. Also, the upper and lower walls 254 and 258 of the sleeve 252 are preferably spaced apart by a distance such that the folded portions 272 and 274 of the belt webbing 270 are squeezed between the upped and lower sleeve walls. This spacing places a clamp load on the folded portions 272 and 274 of the belt webbing 270 disposed between the upper and lower sleeve walls 254 and 258.

The sleeve 252 maintains the belt webbing 270 in the position shown in Fig. 6, unless a tensile force greater than the predetermined force is applied to the projecting end portions 280 and 282 of the belt webbing 270. The predetermined force is a force which is not experienced during use of the vehicle safety belt system 11 other than in a vehicle collision. Thus, the parts of the energy management device 250 normally stay in a position shown in Fig. 6 in which the belt webbing 270 is disposed in a shortened and folded condition.

In the event of sudden deceleration such as occurs in a vehicle collision, a tensile force greater than the predetermined force is applied to the projecting end portions 280 and 282 of the belt webbing 270. The rivets 284 and 286 prevent movement of the second folded portion 274 of the belt webbing 270 relative to the sleeve bottom wall 258. The clamp force exerted by the sleeve 252 also helps to hold the belt webbing folded portions 272 and 274 within the chamber 266.

The tensile force exerted on the belt webbing 270 attempts to unfold and straighten the belt webbing. The walls of the sleeve 252 are not strong enough to resist the force exerted by the belt webbing 270. The upper wall 254 and possibly the side walls 262 and 264 begin to tear, as illustrated in Fig. 7B. An end portion 290 of the sleeve upper wall 254 tears or peels off and moves away from the lower wall 258. As tensile force continues to be applied to the end portions 280 and 282 of the belt webbing 270, the parts of the energy management device 250 move to the fully extended condition shown in Fig. 7C. The belt webbing 270 unfolds completely, against the resistance of the material of the sleeve 252 to tearing.

The resistance to tearing of the material of the sleeve 252 increases the period of time during which the belt webbing unfolds and moves from the shortened condition to the extended condition. This reduces the abruptness of the load on the vehicle occupant during a vehicle collision.

Fig. 8 illustrates an energy management device 300 in accordance with a fourth embodiment of the invention. The energy management device 300 is similar to the energy management device 250 illustrated in Figs. 6-7. The energy management device 300 can be substituted for the energy management device 10 of Figs. 1-3 in the seat belt system 11.

The energy management device 300 includes a sleeve 302 having an upper wall 304 and a lower wall 306 spaced from and extending parallel to the upper wall 304. Two parallel side walls (not shown) extend between and interconnect the upper wall 304 and the lower wall 306. The sleeve walls define between them a chamber 310 in which are disposed two unstitched folded portions 312 and 314 of a length of belt webbing 316.

The length of belt webbing 316 is folded 180° at 318 between the first folded portion 312 and the second folded portion 314. The belt webbing 316 is also folded 180° at 320 between the first folded portion 312 and a first projecting end portion 322 of the webbing 316. The end portion 322 overlies the upper wall 304 of the sleeve 302. A second end portion 324 of the belt webbing 316 projects outwardly from one end of the sleeve 302.

The upper and lower walls 304 and 306 of the sleeve 302 are preferably spaced apart by a distance selected so that the folded portions 312 and 314 of the belt webbing 316 are squeezed between the upper and lower sleeve walls. This spacing places a clamp load on the folded portions 312 and 314 of the belt webbing 316.

Whereas in the third embodiment of the invention (Figs. 6 and 7) the rivets 284 and 286 secure the belt webbing to the sleeve at a location outside of the chamber 266, in the energy management device 300 a distribution plate 330 disposed inside the chamber 310 secures the belt webbing 316 to the sleeve 302. The distribution plate 330 is secured to the lower wall 304 of the sleeve 302. The distribution plate 330 is a metal plate or bar which extends across the width of the chamber 310, between and inside the side walls of the sleeve 302. Two rivets, one of which is shown at 332, secure the distribution plate 330 to the sleeve lower wall 304. An upper head portion 334 of the rivet 332 engages a major side surface 336 of the distribution plate 330. A lower head portion 338 of the rivet 332 clamps against an outer major side surface 340 of the sleeve lower wall 306.

The distribution plate 330 clampingly fastens the second folded portion 314 of the belt webbing 316 to the sleeve lower wall 306 across substantially the entire width of the belt webbing. This clamping occurs at a location within the chamber 310 adjacent to the fold 318 between the first folded portion 312 and the second folded portion 314. This helps secure not only the first folded portion 312 but also the second folded portion 314 of the belt webbing 316 in position relative to the sleeve lower wall 306.

In the event of sudden deceleration such as occurs in a vehicle collision, a tensile force greater than a predetermined force is applied to the projecting end portions 322 and 324 of the belt webbing 316. The distribution plate 330 prevents movement of the first and second folded portions 312 and 314 relative to the sleeve lower wall 306. The walls of the sleeve 302 are not strong enough to resist the tension force exerted by the belt webbing 316. The sleeve walls tear, absorbing some of the energy of the vehicle occupant's forward movement as applied to the belt webbing end portions 312 and 314. This reduces the abruptness of the load on the vehicle occupant as described above.

Fig. 9 illustrates an energy management device 350 in accordance with a fifth embodiment of the invention. The energy management device 350 can be substituted for the energy management device 10 in the seat belt system 11.

The energy management device 350 includes a sleeve 352 which is similar to the sleeve 252 (Figs. 6 and 7) described above, and a length of belt webbing 354 which is similar to the belt webbings described above. However, the sleeve 352 has a top wall 356 which varies in thickness from end to end along the length of the sleeve. Thus, the sleeve top wall 356 has a thickness at one end 358 which is less than its thickness at the opposite end 360. The rate of increase in thickness is constant in proportion to the distance from the end 358.

The operation of the energy management device 350 is similar to the operation of the energy management device 250 described above. However, because the sleeve top wall 356 varies in thickness along its length, the resistance to tearing correspondingly varies along the length of the sleeve top wall. Thus, the thinner material of the top wall 356 at the end 358 of the sleeve 352 offers less resistance to tearing than does the thicker material of the top wall adjacent to the other end 360 of the sleeve. Accordingly, as the sleeve top wall 356 progressively tears or peels off from the side walls and the bottom wall 362, the amount of force needed to continue the tearing process increases.

Thus, the sleeve 352, and the energy management device 350, offer a progressively increasing resistance to unfolding and lengthening of the belt webbing 354 from the shortened condition shown in Fig. 9 to an extended condition (not shown) in which the belt webbing is straight and unfolded. The amount of resistance can be varied as desired by setting the material thickness appropriately. The energy management device 350 can utilize the pair of rivets 284 and 286 illustrated in Fig. 6 to retain the belt webbing 354 in the shortened condition when desired. Alternatively, the energy management device 350 can utilize the distribution plate 330 illustrated in Fig. 8 to retain the belt webbing 354 in the shortened condition.

From the above description of the invention, those skilled in the art will perceive improvements, changes and modifications in the invention. For example, an energy management device in accordance with the present invention may be incorporated in a seat belt system at a location other than between the buckle and the vehicle body. Such improvements, changes and modifications within the skill of the art are intended to be covered by the appended claims.

It should be noted that the objects and advantages of the invention may be attained by means of any compatible combination(s) particularly pointed out in the items of the following summary of the invention and the appended claims.

The invention may be summarized as follows:
1. A vehicle safety apparatus comprising:
   a length of belt webbing for restraining a vehicle occupant, said length of belt webbing including a plurality of folded portions of belt webbing disposed in an overlying relationship with each other and being unstitched to each other; and
   means for controlling unfolding of said unstitched folded portions of belt webbing;
   said length of belt webbing having end portions extending away from said means for controlling unfolding in opposite directions;
   said means for controlling unfolding including means for applying force to said unstitched folded portions of belt webbing for resisting unfolding, said unstitched folded portions being movable relative to each other against said force applied to said unstitched folded portions in response to the application of a tensile force greater than a predetermined force to said belt webbing end portions.
2. An apparatus particularly as defined in 1 wherein said length of belt webbing has a longitudinal axis and is folded along fold lines extending transverse to said longitudinal axis, said overlying folded portions being longitudinally co-extensive within said means for applying force.
3. A vehicle safety apparatus particularly as defined in 1 wherein said means for applying force comprises relatively movable first and second clamp plates having clamping surfaces engaging said folded portions of said belt webbing, and biasing means extending between said first and second clamp plates and biasing said clamp plates toward each other to control unfolding of said folded portions.
4. A vehicle safety apparatus particularly as defined in 3 wherein said biasing means comprises spring means engaging at least one of said clamp plates for biasing said first clamp plate toward said second clamp plate to apply force to said unstitched folded portions of said belt webbing.
5. A vehicle safety apparatus particularly as defined in 3 wherein said length of belt webbing has a longitudinal axis and is folded along fold lines extending transverse to said longitudinal axis,
   said overlying folded portions of said belt webbing being longitudinally co-extensive between said clamp plates,
   said first clamp plate being in frictional engagement with said first folded portion of said belt webbing within said means for applying force,
   said first folded portion of said belt webbing being in frictional engagement with said second folded portion of said belt webbing within said means for applying force.
6. A vehicle safety apparatus particularly as defined in 5 comprising a third folded portion of said belt webbing, said second and third folded portions of said belt webbing being in frictional engagement with each other within said means for applying force, said third folded portion and said second clamp plate being in frictional engagement with each other within said means for applying force.
7. A vehicle safety apparatus particularly as defined in 1 wherein said means for applying force comprises a sleeve circumscribing said unstitched folded portions of said belt webbing and having first and second wall portions engaging respective unstitched folded portions of said belt webbing, said sleeve having a side wall joining said first and second wall portions and resisting separation of said first and second wall portions to resist unfolding of said unstitched folded portions of said belt webbing, said sleeve having a frangible portion breakable in response to the application of a tensile force greater than the predetermined force to said belt webbing end portions to enable separation of said first and second wall portions of said sleeve to enable unfolding of said folded portions of said belt webbing.
8. A vehicle safety apparatus particularly as defined in 7 wherein said frangible portion of said sleeve comprises one of said first and second sleeve wall portions which tears in response to the application of a tensile force greater than the predetermined force to said belt webbing end portions.
9. A vehicle safety apparatus particularly as defined in 8 wherein said frangible portion of said sleeve has a varying cross-sectional thickness and a resistance to tearing which increases progressively as said first and second wall portions separate and said belt webbing folded portions unfold.
10. A vehicle safety apparatus particularly as defined in 7 comprising means for preventing slippage of said belt webbing folded portions in said sleeve and for ensuring breaking of said frangible portion of said sleeve in response to the application of a tensile force greater than the predetermined force to said belt webbing end portions, said means comprising fastener means for fastening a portion of said length of belt webbing to said sleeve.
11. A vehicle safety apparatus preferably as defined in 10 wherein said fastener means comprises distribution plate means for clamping one of said folded portions of said belt webbing to one of said wall portions across the width of said one folded portion.
12. A vehicle safety apparatus comprising:
   a length of belt webbing for restraining a vehicle occupant, said length of belt webbing having a shortened condition and an extended condition, said length of belt webbing when in the shortened condition including a plurality of folded portions disposed in an overlying relationship with each other; and
   clamping means for controlling movement of said length of belt webbing from the shortened condition to the extended condition;
   said clamping means comprising a first clamp plate engaging a first one of said folded portions, a second clamp plate engaging a second one of said folded portions, and biasing means extending between said first and second clamp plates and biasing said clamp plates toward each other to resist separation of said folded portions;
   said length of belt webbing having end portions extending from opposite ends of said clamping means;
   said folded portions being movable relative to each other against the clamp force of said first and second clamp plates in response to the application of a tensile force greater than a predetermined force to said belt webbing end portions, to move said length of belt webbing from the shortened condition to the extended condition.
13. A vehicle safety apparatus preferably as defined in 12 wherein said biasing means comprises spring means engaging said first clamp plate for biasing said first clamp plate toward said second clamp plate to resist separation of said folded portions.
14. A vehicle safety apparatus preferably as defined in 13 wherein each of said first and second clamp plates has a respective central portion overlying said folded portions of said belt webbing and has opposite side portions, said biasing means extending between respective side portions of said first and second clamp plates, said belt webbing folded portions being disposed in said energy absorbing means between said clamp plate central portions, said clamp plate side portions and said biasing means being disposed on opposite sides of said clamp plate central portions and on opposite sides of said belt webbing folded portions.
15. A vehicle safety apparatus preferably as defined in 13 wherein said first clamp plate comprises a U-shaped base having a bottom wall and having parallel opposite side walls extending transverse to said bottom wall and defining between them a belt webbing passage approximately the width of said belt webbing, said folded portions of said belt webbing being disposed in said belt webbing passage, said second clamp plate and said biasing means also being disposed in said belt webbing passage.
16. A vehicle safety apparatus comprising:
   a length of belt webbing for restraining a vehicle occupant, said length of belt webbing having a shortened condition and an extended condition, said length of belt webbing when in the shortened condition including a plurality of folded portions disposed in an overlying relationship with each other; and
   sleeve means for controlling movement of said length of belt webbing from the shortened condition to the extended condition;
   said sleeve means comprising a frangible sleeve surrounding said folded portions of said belt webbing and including a first wall having a first surface engaging a major side surface on a first one of said folded portions, a second wall having a second surface engaging a major side surface on a second one of said folded portions, and a side wall for biasing said first and second walls toward each other to resist relative movement of said plurality of folded portions;
   said length of belt webbing having end portions extending away from said sleeve means in opposite directions;
   said sleeve being frangible in response to the application of a tensile force greater than a predetermined force to said belt webbing end portions to enable separation of said first and second walls and movement of said length of belt webbing from the shortened condition to the extended condition.
17. A vehicle safety apparatus preferably as defined in 16 wherein said sleeve comprises a plastic member having a generally rectangular cross-sectional configuration defining a chamber in said sleeve, said folded portions being disposed in said chamber.
18. A vehicle safety apparatus preferably as defined in 17 wherein said frangible sleeve has a varying cross-sectional thickness with a correspondingly varying resistance to breaking, the resistance to breaking of said frangible sleeve increasing progressively as said first and second walls separate and said belt webbing moves from the shortened condition to the extended condition.
19. A vehicle safety apparatus comprising:
   a length of belt webbing for restraining a vehicle occupant, said length of belt webbing having first and second end portions and being movable, in response to the application of a tensile force greater than a predetermined force to said belt webbing end portions from a shortened condition to an extended condition;
   said length of belt webbing when in the shortened condition including a plurality of folded portions disposed in an overlying relationship with each other intermediate said end portions, said folded portions unfolding as said belt webbing moves from the shortened condition to the extended condition; and
   means engaging said length of belt webbing for biasing said folded portions into abutting engagement with each other when said belt webbing is in the shortened condition and for producing relative sliding movement between said folded portions as said folded portions unfold and said belt webbing moves from the shortened condition to the extended condition.

## Claims

1. A vehicle safety apparatus comprising:
a length of belt webbing for restraining a vehicle occupant, said length of belt webbing including a plurality of folded portions of belt webbing disposed in an overlying relationship with each other and being unstitched to each other; and
means for controlling unfolding of said unstitched folded portions of belt webbing;
said length of belt webbing having end portions extending away from said means for controlling unfolding in opposite directions;
said means for controlling unfolding including means for applying force to said unstitched folded portions of belt webbing for resisting unfolding, said unstitched folded portions being movable relative to each other against said force applied to said unstitched folded portions in response to the application of a tensile force greater than a predetermined force to said belt webbing end portions.

2. An apparatus as set forth in claim 1 wherein said length of belt webbing has a longitudinal axis and is folded along fold lines extending transverse to said longitudinal axis, said overlying folded portions being longitudinally co-extensive within said means for applying force.

3. A vehicle safety apparatus as set forth in claim 1 wherein said means for applying force comprises relatively movable first and second clamp plates having clamping surfaces engaging said folded portions of said belt webbing, and biasing means extending between said first and second clamp plates and biasing said clamp plates toward each other to control unfolding of said folded portions,
wherein preferably
said biasing means comprises spring means engaging at least one of said clamp plates for biasing said first clamp plate toward said second clamp plate to apply force to said unstitched folded portions of said belt webbing,
wherein preferably said length of belt webbing has a longitudinal
axis and is folded along fold lines extending transverse to said longitudinal axis,
said overlying folded portions of said belt webbing being longitudinally co-extensive between said clamp plates,
said first clamp plate being in frictional engagement with said first folded portion of said belt webbing within said means for applying force,
said first folded portion of said belt webbing being in frictional engagement with said second folded portion of said belt webbing within said means for applying forced, and
preferably comprising a third folded portion of said belt webbing, said second and third folded portions of said belt webbing being in frictional engagement with each other within said means for applying force, said third folded portion and said second clamp plate being in frictional engagement with each other within said means for applying force.

4. A vehicle safety apparatus as set forth in claim 1 wherein said means for applying force comprises a sleeve circumscribing said unstitched folded portions of said belt webbing and having first and second wall portions engaging respective unstitched folded portions of said belt webbing, said sleeve having a side wall joining said first and second wall portions and resisting separation of said first and second wall portions to resist unfolding of said unstitched folded portions of said belt webbing, said sleeve having a frangible portion breakable in response to the application of a tensile force greater than the predetermined force to said belt webbing end portions to enable separation of said first and second wall portions of said sleeve to enable unfolding of said folded portions of said belt webbing,
wherein preferably said frangible portion of said sleeve comprises one of said first and second sleeve wall portions which tears in response to the application of a tensile force greater than the predetermined force to said belt webbing end portions,
wherein preferably said frangible portion of said sleeve has a varying cross-sectional thickness and a resistance to tearing which increases progressively as said first and second wall portions separate and said belt webbing folded portions unfold,
preferably comprising means for preventing slippage of said belt webbing folded portions in said sleeve and for ensuring breaking of said frangible portion of said sleeve in response to the application of a tensile force greater than the predetermined force to said belt webbing end portions, said means comprising fastener means for fastening a portion of said length of belt webbing to said sleeve,
wherein preferably said fastener means comprises distribution plate means for clamping one of said folded portions of said belt webbing to one of said wall portions across the width of said one folded portion.

5. A vehicle safety apparatus comprising:
a length of belt webbing for restraining a vehicle occupant, said length of belt webbing having a shortened condition and an extended condition, said length of belt webbing when in the shortened condition including a plurality of folded portions disposed in an overlying relationship with each other; and
clamping means for controlling movement of said length of belt webbing from the shortened condition to the extended condition;
said clamping means comprising a first clamp plate engaging a first one of said folded portions, a second clamp plate engaging a second one of said folded portions, and biasing means extending between said first and second clamp plates and biasing said clamp plates toward each other to resist separation of said folded portions;
said length of belt webbing having end portions extending from opposite ends of said clamping means;
said folded portions being movable relative to each other against the clamp force of said first and second clamp plates in response to the application of a tensile force greater than a predetermined force to said belt webbing end portions, to move said length of belt webbing from the shortened condition to the extended condition.

6. A vehicle safety apparatus as set forth in claim 5 wherein said biasing means comprises spring means engaging said first clamp plate for biasing said first clamp plate toward said second clamp plate to resist separation of said folded portions,
wherein preferably each of said first and second clamp plates has a respective central portion overlying said folded portions of said belt webbing and has opposite side portions, said biasing means extending between respective side portions of said first and second clamp plates, said belt webbing folded portions being disposed in said energy absorbing means between said clamp plate central portions, said clamp plate side portions and said biasing means being disposed on opposite sides of said clamp plate central portions and on opposite sides of said belt webbing folded portions,
wherein preferably said first clamp plate comprises a U-shaped base having a bottom wall and having parallel opposite side walls extending transverse to said bottom wall and defining between them a belt webbing passage approximately the width of said belt webbing, said folded portions of said belt webbing being disposed in said belt webbing passage, said second clamp plate and said biasing means also being disposed in said belt webbing passage.

7. A vehicle safety apparatus comprising:
a length of belt webbing for restraining a vehicle occupant, said length of belt webbing having a shortened condition and an extended condition, said length of belt webbing when in the shortened condition including a plurality of folded portions disposed in an overlying relationship with each other; and
sleeve means for controlling movement of said length of belt webbing from the shortened condition to the extended condition;
said sleeve means comprising a frangible sleeve surrounding said folded portions of said belt webbing and including a first wall having a first surface engaging a major side surface on a first one of said folded portions, a second wall having a second surface engaging a major side surface on a second one of said folded portions, and a side wall for biasing said first and second walls toward each other to resist relative movement of said plurality of folded portions;
said length of belt webbing having end portions extending away from said sleeve means in opposite directions;
said sleeve being frangible in response to the application of a tensile force greater than a predetermined force to said belt webbing end portions to enable separation of said first and second walls and movement of said length of belt webbing from the shortened condition to the extended condition.

8. A vehicle safety apparatus as set forth in claim 7 wherein said sleeve comprises a plastic member having a generally rectangular cross-sectional configuration defining a chamber in said sleeve, said folded portions being disposed in said chamber, and
wherein preferably said frangible sleeve has a varying cross-sectional thickness with a correspondingly varying resistance to breaking, the resistance to breaking of said frangible sleeve increasing progressively as said first and second walls separate and said belt webbing moves from the shortened condition to the extended condition.

9. A vehicle safety apparatus comprising:
a length of belt webbing for restraining a vehicle occupant, said length of belt webbing having first and second end portions and being movable, in response to the application of a tensile force greater than a predetermined force to said belt webbing end portions from a shortened condition to an extended condition;
said length of belt webbing when in the shortened condition including a plurality of folded portions disposed in an overlying relationship with each other intermediate said end portions, said folded portions unfolding as said belt webbing moves from the shortened condition to the extended condition; and
means engaging said length of belt webbing for biasing said folded portions into abutting engagement with each other when said belt webbing is in the shortened condition and for producing relative sliding movement between said folded portions as said folded portions unfold and said belt webbing moves from the shortened condition to the extended condition.

10. A vehicle safety apparatus comprising:
a length of belt webbing for restraining a vehicle occupant, said length of belt webbing including a plurality of folded portions of belt webbing disposed in an overlying relationship with each other and being unstitched to each other; and
means for controlling unfolding of said unstitched folded portions of belt webbing;
